# EUROPEAN PATENT APPLICATION

(11) **EP 4 712 557 A1**
(43) Date of publication of application: **18.03.2026**
(21) Application number: 23936890.5
(22) Date of filing: 12.05.2023
(51) Int. Cl.: H04W 36/00

(54) **BEAM INDICATION METHOD, DEVICE, APPARATUS, AND SYSTEM, AND STORAGE MEDIUM**

(71) Applicant: Beijing Xiaomi Mobile Software Co., Ltd., Beijing 100085 (CN)
(72) Inventor: LUO, Xingyi, Beijing 100085 (CN)
(74) Representative: Stöckeler, Ferdinand
(86) International application number: PCT/CN2023/094077
(87) International publication number: WO 2024/234200

(57) **Abstract**

The present disclosure relates to a beam indication method, device, apparatus, and system, and a storage medium. The method comprises: sending first indication information, the first indication information at least comprising beam information of a target cell, the beam information being used for indicating a transmission beam for uplink and downlink data transmission between a terminal and the target cell, and the target cell being a cell selected from at least one candidate cell according to a beam measurement result In this way, the beam information of the target cell can be indicated to the terminal while handover is triggered, thereby reducing the interruption time of data transmission during cell handover.

## Description

### FIELD

The present disclosure relates to the field of communication technology, and in particular to a beam indication method, device, apparatus and system, and a storage medium.

### BACKGROUND

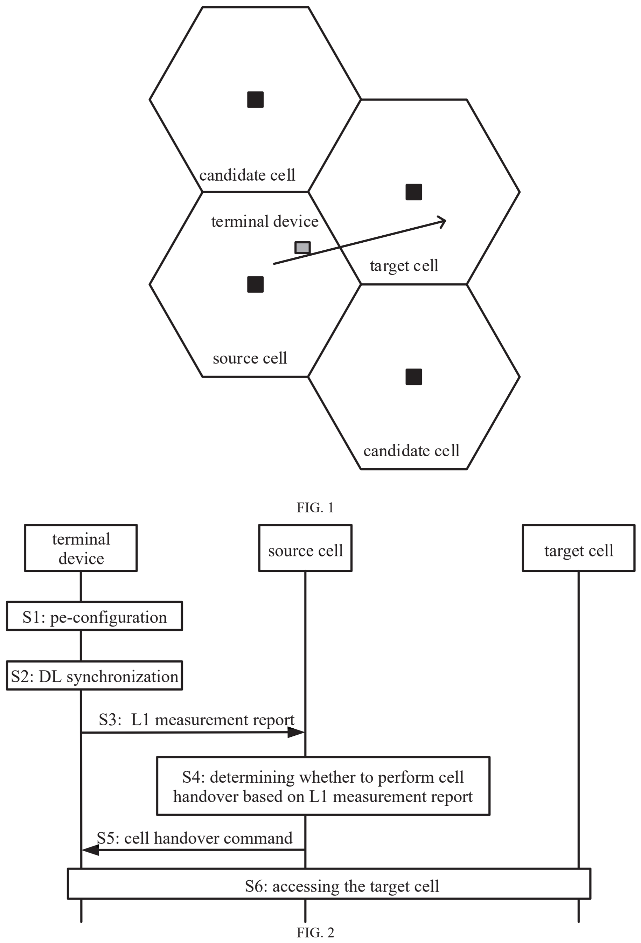

In the 3rd Generation Partnership Project (3GPP) Radio Access Network (RAN) #80 meeting, layer 1/layer 2 (L1/L2) based inter-cell mobility (LTM) was proposed. As shown in FIG. 1, a network device may maintain multiple candidate cells for a terminal. In a case that the terminal moves and needs to perform a cell handover, it may select a cell from the multiple candidate cells as a target cell and then may switch to the target cell.

In order to reduce the cell handover delay in LTM, the network device needs to indicate beam information of the target cell to the terminal as soon as possible, which enables the terminal to initiate uplink and downlink data transmissions with the target cell immediately after receiving a cell handover command. Therefore, how to indicate the beam information of the target cell to the terminal is currently an urgent problem that needs to be solved.

### SUMMARY

Embodiments of the present disclosure provide a beam indication method, device, apparatus and system, and a storage medium.

According to a first aspect of the embodiments of the present disclosure, a beam indication method is provided, performed by a network device, and the method includes:
sending first indication information, where the first indication information at least includes beam information of at least one target cell, the beam information indicates a transmission beam for an uplink data transmission and a downlink data transmission between a terminal and the at least one target cell, and the at least one target cell is a cell selected from at least one candidate cell based on a beam measurement result.

In some embodiments, the at least one candidate cell is a cell pre-configured for the terminal based on a radio resource management measurement result.

In some embodiments, the method further includes: sending second indication information, where the second indication information indicates a type of the beam information,
where in a case that the type of the beam information is a joint beam indication, the first indication information includes a joint transmission configuration indicator (TCI) state indicating the transmission beam for the uplink data transmission and the downlink data transmission between the terminal and the at least one target cell; and/or
in a case that the type of the beam information is a separate beam indication, the first indication information includes an uplink TCI state and a downlink TCI state, the uplink TCI state indicates a transmission beam for the uplink data transmission between the terminal and the at least one target cell, and the downlink TCI state indicates a transmission beam for the downlink data transmission between the terminal and the at least one target cell.

In some embodiments, the first indication information and the second indication information are carried in the same signaling.

In some embodiments, the first indication information is carried in a first signaling, the second indication information is carried in a second signaling, and the first signaling and the second signaling are different.

In some embodiments, the second signaling includes an RRC signaling or a MAC CE signaling.

In some embodiments, the beam information of the at least one target cell is configured in an RRC configuration parameter of a source cell, or is configured in an RRC configuration parameter of the at least one target cell, or is configured independently of an RRC configuration parameter of a source cell and an RRC configuration parameter of the at least one target cell, where the source cell is a serving cell where the terminal currently camps.

In some embodiments, the beam information of the at least one target cell is configured in the RRC configuration parameter of the source cell, and the sending the first indication information includes:
sending the first indication information based on a type of beam information of the source cell.

In some embodiments, the type of the beam information of the at least one target cell is the same as the type of the beam information of the source cell.

In some embodiments, the beam information of the at least one target cell is configured in the RRC configuration parameter of the at least one target cell, the sending the second indication information includes:
sending a third signaling, where the third signaling includes the second indication information, and
the sending the first indication information includes:
obtaining the type of the beam information of the at least one target cell; and
sending a fourth signaling based on the type of the beam information of the at least one target cell, where the fourth signaling includes the first indication information.

In some embodiments, the beam information of the at least one target cell is configured in an RRC configuration parameter of the at least one target cell, the first indication information includes a target reference signal of the at least one target cell, and a beam corresponding to the target reference signal is the transmission beam for the uplink data transmission and the downlink data transmission between the terminal and the at least one target cell.

In some embodiments, the target reference signal includes a first reference signal and a second reference signal, a beam corresponding to the first reference signal is a transmission beam for the uplink data transmission between the terminal and the at least one target cell, and a beam corresponding to the second reference signal is a transmission beam for the downlink data transmission between the terminal and the at least one target cell.

In some embodiments, in a case that the beam information is carried in a first indication field of the first indication information, the transmission beam indicated by the beam information is used to transmit all channels or signals between the terminal and the at least one target cell.

In some embodiments, in a case that the beam information is carried in a second indication field of the first indication information, the transmission beam indicated by the beam information is used to transmit a designated channel or a designated signal between the terminal and the at least one target cell, the designated channel includes a downlink control channel, and the designated signal includes a downlink control signal.

In some embodiments, in a case that the at least one target cell includes a primary cell and a secondary cell, the beam information indicates transmission beams of all cells constituting the at least one target cell.

In some embodiments, in a case that the beam information of the at least one target cell is configured independently of an RRC configuration parameter of the source cell and an RRC configuration parameter of the at least one candidate cell, the at least one target cell includes a primary cell and a secondary cell, the source cell is a serving cell where the terminal currently camps, the method further includes:
sending third indication information, where the third indication information indicates one or more cells within the at least one target cell that support simultaneously applying the beam information.

According to a second aspect of the embodiments of the present disclosure, a beam indication method is provided, performed by a terminal, and the method includes:
receiving first indication information, where the first indication information at least includes beam information of at least one target cell, the beam information indicates a transmission beam for an uplink data transmission and a downlink data transmission between the terminal and the at least one target cell, and the at least one target cell is a cell selected from at least one candidate cell based on a beam measurement result.

In some embodiments, the at least one candidate cell is a cell pre-configured for the terminal based on a radio resource management measurement result.

In some embodiments, the method further includes:
receiving second indication information, where the second indication information indicates a type of the beam information,
where in a case that the type of the beam information is a joint beam indication, the first indication information includes a joint transmission configuration indicator (TCI) state indicating the transmission beam for the uplink data transmission and the downlink data transmission between the terminal and the at least one target cell; and/or
in a case that the type of the beam information is a separate beam indication, the first indication information includes an uplink TCI state and a downlink TCI state, the uplink TCI state indicates a transmission beam for the uplink data transmission between the terminal and the at least one target cell, and the downlink TCI state indicates a transmission beam for the downlink data transmission between the terminal and the at least one target cell.

In some embodiments, the first indication information and the second indication information are carried in the same signaling.

In some embodiments, the first indication information is carried in a first signaling, the second indication information is carried in a second signaling, and the first signaling and the second signaling are different.

In some embodiments, the second signaling includes an RRC signaling or a MAC CE signaling.

In some embodiments, the beam information of the at least one target cell is configured in an RRC configuration parameter of a source cell, or is configured in an RRC configuration parameter of the at least one target cell, or is configured independently of an RRC configuration parameter of a source cell and an RRC configuration parameter of the at least one target cell, where the source cell is a serving cell where the terminal currently camps.

In some embodiments, the beam information of the at least one target cell is configured in the RRC configuration parameter of the source cell, and the type of the beam information of the at least one target cell is the same as the type of the beam information of the source cell.

In some embodiments, the beam information of the at least one target cell is configured in the RRC configuration parameter of the at least one target cell, the receiving the second indication information includes:
receiving a third signaling, where the third signaling includes the second indication information, and
the receiving first indication information includes:
receiving a fourth signaling, where the fourth signaling includes the first indication information, where the fourth signaling is sent by a network device based on the type of the beam information of the at least one target cell.

In some embodiments, the beam information of the at least one target cell is configured in an RRC configuration parameter of the at least one target cell, the first indication information comprises a target reference signal of the at least one target cell, and a beam corresponding to the target reference signal is the transmission beam for the uplink data transmission and the downlink data transmission between the terminal and the at least one target cell.

In some embodiments, the target reference signal comprises a first reference signal and a second reference signal, a beam corresponding to the first reference signal is a transmission beam for the uplink data transmission between the terminal and the at least one target cell, and a beam corresponding to the second reference signal is a transmission beam for the downlink data transmission between the terminal and the at least one target cell.

In some embodiments, in a case that the beam information is carried in a first indication field of the first indication information, the transmission beam indicated by the beam information is used to transmit all channels or signals between the terminal and the at least one target cell.

In some embodiments, in a case that the beam information is carried in a second indication field of the first indication information, the transmission beam indicated by the beam information is used to transmit a designated channel or a designated signal between the terminal and the at least one target cell, the designated channel comprises a downlink control channel, and the designated signal comprises a downlink control signal.

In some embodiments, in a case that the at least one target cell includes a primary cell and a secondary cell, the beam information indicates transmission beams of all cells constituting the at least one target cell.

In some embodiments, in a case that the beam information of the at least one target cell is configured independently of an RRC configuration parameter of the source cell and an RRC configuration parameter of the at least one candidate cell, the at least one target cell includes a primary cell and a secondary cell, the source cell is a serving cell where the terminal currently camps, the method further includes:
receiving third indication information, where the third indication information indicates one or more cells within the at least one target cell that support simultaneously applying the beam information.

In some embodiments, the method further includes:
obtaining the beam information of the at least one target cell based on an RRC configuration parameter of the at least one target cell.

In some embodiments, the beam information of the at least one target cell is configured in the RRC configuration parameter of the at least one target cell, and the obtaining the beam information of the at least one target cell based on the RRC configuration parameter of the at least one target cell includes:
obtaining the beam information of the at least one target cell based on the RRC configuration parameter of the at least one target cell, after receiving a cell handover command of the at least one target cell.

In some embodiments, the method further includes:
reporting a beam application time, where the beam application time indicates a minimum interval time for the terminal and the at least one target cell to perform the uplink data transmission and the downlink data transmission based on the beam information, and the beam application time at least includes a time for the terminal to read the RRC configuration parameter.

Regarding the content that is not introduced or described in this embodiment of the present disclosure, please refer to the relevant introduction in the first aspect described above, and repetition is omitted.

According to a third aspect of the embodiments of the present disclosure, a beam indication apparatus is provided, including:
a communication module, configured to send first indication information, where the first indication information at least includes beam information of at least one target cell, the beam information indicates a transmission beam for an uplink data transmission and a downlink data transmission between a terminal and the at least one target cell, and the at least one target cell is a cell selected from at least one candidate cell based on a beam measurement result.

According to a fourth aspect of the embodiments of the present disclosure, a beam indication apparatus is provided, including:
a communication module, configured to receive first indication information, where the first indication information at least includes beam information of at least one target cell, the beam information indicates a transmission beam for an uplink data transmission and a downlink data transmission between a terminal and the at least one target cell, and the at least one target cell is a cell selected from at least one candidate cell based on a beam measurement result.

According to a fifth aspect of the embodiments of the present disclosure, a network device is provided, including:
a processor; and
a memory configured to store processor-executable instructions,
where the processor is configured to execute steps of the method according to the first aspect of the present disclosure.

According to a sixth aspect of the embodiments of the present disclosure, a terminal is provided, including:
a processor; and
a memory configured to store processor-executable instructions,
where the processor configured to execute steps of the method according to the second aspect of the present disclosure.

According to a seventh aspect of the embodiments of the present disclosure, a computer-readable storage medium is provided, configured to store computer program instructions thereon. The computer program instructions, when executed by a processor, cause steps of the method according to the first aspect of the present disclosure to be implemented.

According to an eighth aspect of the embodiments of the present disclosure, a computer-readable storage medium is provided, configured to store computer program instructions thereon. The computer program instructions, when executed by a processor, cause steps of the beam indication method according to the second aspect of the present disclosure to be implemented.

According to a ninth aspect of the embodiments of the present disclosure, a communication system is provided, including:
a network device, configured to perform the beam indication method according to the first aspect of the present disclosure; and
a terminal, configured to perform the beam indication method according to the second aspect of the present disclosure.

Based on the technical solution provided by the embodiments of the present disclosure, the following beneficial effects can be achieved. The network device sends the first indication information, the first indication information at least includes beam information of the at least one target cell, the beam information indicates the transmission beam for the uplink data transmission and the downlink data transmission between the terminal and the at least one target cell, the at least one target cell is the cell selected from at least one candidate cell according to the beam measurement result. In this way, the network device can indicate the beam information of the at least one target cell to the terminal at the same time when triggering a handover, facilitating faster uplink and downlink data transmissions between the terminal and the at least one target cell after a cell handover command is received, so as to reduce a data transmission interruption time during the handover, thereby improving the efficiency of data transmission.

It is appreciated that the foregoing general description and the following detailed description are exemplary and explanatory only and do not limit the present disclosure.

### BRIEF DESCRIPTION OF THE DRAWINGS

The accompanying drawings, which are incorporated in and constitute a part of this specification, illustrate embodiments of the present disclosure and serve to explain principles of the present disclosure in combination with the description.
FIG. 1 is a schematic diagram showing communications by a terminal according to an exemplary embodiment.
FIG. 2 is a schematic diagram of a cell handover procedure according to an exemplary embodiment.
FIG. 3 is a schematic diagram showing a communication system according to an exemplary embodiment.
FIG. 4 (a) to FIG. 4 (c) are schematic diagrams showing several application scenarios according to an exemplary embodiment.
FIG. 5 is a schematic structural diagram showing a terminal according to an exemplary embodiment.
FIG. 6 is a schematic flow chart of a beam indication method according to an exemplary embodiment.
FIG. 7 is a schematic flow chart of another beam indication method according to an exemplary embodiment.
FIG. 8 is a schematic diagram showing a format of a MAC CE signaling according to an exemplary embodiment.
FIG. 9 is a schematic diagram showing another format of a MAC CE signaling according to an exemplary embodiment.
FIG. 10 is a schematic diagram showing another format of a MAC CE signaling according to an exemplary embodiment.
FIG. 11 is a schematic flow chart of another beam indication method according to an exemplary embodiment.
FIG. 12 is a schematic structural diagram of a beam indication apparatus according to an exemplary embodiment.
FIG. 13 is a schematic structural diagram of another beam indication apparatus according to an exemplary embodiment.
FIG. 14 is a schematic structural diagram of a communication device according to an exemplary embodiment.

### DETAILED DESCRIPTION

Exemplary embodiments will be described in detail herein, examples of which are shown in the accompanying drawings. When the following description refers to the drawings, the same numbers in different drawings represent the same or similar elements unless otherwise indicated. Implementations described in the following exemplary embodiments do not represent all embodiments consistent with the present disclosure. Instead, they are merely examples of devices and methods consistent with some aspects of the present disclosure as detailed in the appended claims.

In the description of the embodiments of the present disclosure, terms used, such as "first", "second", etc., are used to distinguish similar objects and do not have to be understood as a specific order or sequence. In addition, in the description with reference to the accompanying drawings, the same symbol in different drawings represent the same element unless otherwise stated.

In the description of the embodiments of the present disclosure, unless otherwise specified, "multiple" refers to two or more, and other quantifiers are similar thereto. Terms such as "At least one item", "one or more items" or similar expressions refer to any combination of these items, including any combination of single items or multiple items. For example, at least one item may represent any number; for another example, one or more items of a, b and c may represent: a, b, c, a-b, a-c, b-c, or a-b-c, where a, b, c may be single or multiple. The term "and/or" is a kind of association relationship that describes associated objects, indicating that there may be three relationships. For example, A and/or B may represent: A alone, both A and B, and B alone, where A and B may be singular or plural. The character "/" indicates that objects associated before and after it are in an "or" relationship. The singular forms "a", "an", "one" "the", "said", "the above", and "the foregoing" are intended to include the plural forms as well, unless the context clearly indicates otherwise.

In the description of the embodiments of the present disclosure, expressions such as "in a case, A, and in another case, B", and "in response to a case, A, and in response to another case, B" may include the following technical solutions according a situation. A is executed independently of B, that is, in some embodiments, A alone; B is executed independently of A, that is, in some embodiments, B alone; A and B are selectively executed, that is, one of A and B is selected for execution in some embodiments; both A and B are executed, that is, both A and B in some embodiments. When there are more branches such as A, B, C, etc., the above similar rule applies.

In the description of the embodiments of the present disclosure, expressions such as "including A", "comprising A", "indicates A", and "carrying A" may be interpreted as directly carrying A or as implicitly indicating A.

In the description of the embodiments of the present disclosure, terms such as "in response to...", "in response to determining...", "in a case that...", "at atime...", "when...", "in case of...", etc. may be used interchangeably.

In some embodiments, terms such as "greater than", "greater than or equal to", "above", "higher than", and "not less than" may be interchangeable, and terms such as "less than", "less than or equal to", "below", "lower than", and "not greater than" may be interchangeable.

In some embodiments, terms such as "network element", "node", "function", "device", "equipment", "system", "chip", and "chip system" may be used interchangeably.

In addition, each element, each row, or each column in the table of the embodiments of the present disclosure may be implemented as an independent embodiment, and a combination of any elements, any rows, and any columns may also be implemented as an independent embodiment.

Although operations or steps may be described in the embodiments or figures of the present disclosure in a specific order, this should not be understood as requiring that these operations or steps be performed in the specified particular order or serial order, or that all illustrated operations or steps be performed to achieve desirable results. In the embodiments of the present disclosure, unless contradictory, these operations or steps may be performed in any order; they may also be performed in parallel; only a part of these operations or steps may be performed; or operations or steps from multiple embodiments or figures may be arbitrarily combined, which is not limited in the embodiments of the present disclosure.

It should be noted that the embodiments of the present disclosure are not exhaustive, but are merely illustrative of some embodiments, and should not be construed as specifically limiting the scope of protection of the present disclosure. Unless contradictory, each step in a particular embodiment may be implemented as an independent embodiment, and the steps may be arbitrarily combined. For example, a solution obtained by removing some steps from a particular embodiment may also be implemented as an independent embodiment; furthermore, the order of steps in a particular embodiment may be arbitrarily swapped. Additionally, optional implementations in a particular embodiment may be arbitrarily combined. Moreover, the various embodiments may be arbitrarily combined with each other. For example, some or all steps from different embodiments may be arbitrarily combined, and a particular embodiment may be arbitrarily combined with optional implementations from other embodiments.

First, some cell handover embodiments to which the present disclosure is applicable are introduced.

Reference is made to FIG. 2, which is a schematic diagram of a cell handover procedure according to an exemplary embodiment. The procedure shown in FIG. 2 includes the following steps.

S1. Pre-configuration by a terminal.

A network device may pre-configure or send a radio resource control (RRC) configuration parameter of a corresponding cell to the terminal via a signaling message, etc. After the terminal receives the RRC configuration parameter of the corresponding cell, it may implement the pre-configuration of the corresponding cell.

S2. The terminal performs downlink synchronization (DL Synchronization).

The terminal may perform synchronization based on downlink synchronization information sent by the network device. The downlink synchronization information includes, but is not limited to, for example, a primary synchronization signal sequence, a secondary synchronization signal sequence, and a reference signal sequence sent by the network device, which is not limited in the present disclosure.

S3. The terminal sends an L1 measurement report to the network device.

The L1 measurement report is used to determine whether to perform cell handover. The L1 measurement report is also referred to as a beam measurement result, which may include, but not limited to, L1-RSRP, L1-SINR of the cell, or other custom information. L1-RSRP is a received power of a reference signal (RSRP) sent by a beam of a corresponding cell, and L1-SINR is a signal to interference plus noise ratio (SINR) of the reference signal sent by the beam of the corresponding cell on the terminal side. The cell handover here may refer to switching a serving cell where the terminal currently camps to another target cell. The serving cell (also referred to as source cell) refers to a communication cell where the terminal currently camps, and the target cell refers to a candidate cell adjacent to the serving cell.

As can be understood, before the terminal communicates with the network device in the serving cell, the terminal will establish an RRC connection with the network device in advance. After the RRC connection is established, the terminal may receive/obtain an RRC configuration parameter configured by the network device for the terminal, and the source of the RRC configuration parameter includes, but is not limited to, establishment of the RRC connection, a system message sent by the network device, or other methods.

S4. The source cell of the network device determines whether to perform a cell handover based on the L1 measurement report.

S5. The source cell of the network device sends a cell handover command (cell switch command) to the terminal.

The network device may determine whether to perform the cell handover based on the L1 measurement report. For example, when an L1 measurement result of a candidate cell is better than that of the current serving cell, or an L1 measurement result of a candidate cell exceeds a certain threshold, it may be determined that the cell handover is required, and the candidate cell may be used as the target cell. When that the necessary of the cell handover is determined by the network device, the source cell may send a cell handover command to the terminal for triggering the terminal to switch from the source cell to the target cell. The cell handover command is used to instruct/trigger the terminal to switch from the source cell to the target cell. Accordingly, after receiving the cell handover command, the terminal may switch from the source cell to the target cell in response to the cell handover command.

S6. The terminal accesses the target cell of the network device.

If timing advance (TA) of the target cell is not measured in advance, the terminal will initiate a random access signaling to access the target cell; if the terminal has obtained the TA of the target cell in advance, the terminal may send an acknowledgment message to access the target cell.

Some embodiments about a system and a scenario applicable to the present disclosure are introduced below.

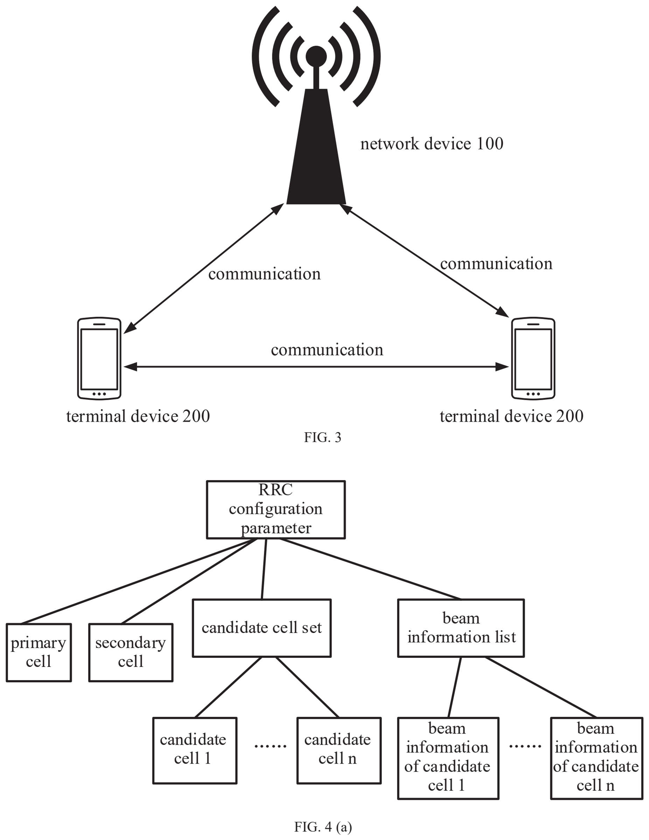

Reference is made to FIG. 3, which is a structural diagram of a communication system according to an exemplary embodiment. The communication system shown in FIG. 3 includes: a network device 100 and a terminal 200. The number of network devices 100 and the number of terminals 200 are not limited in the present disclosure, and the diagram illustrates one network device 100 and two terminals 200 as an example, which is not intended to be limiting. Any two terminals 200 of the present disclosure may communicate with each other via a network, and the network device 100 and the terminal 200 may also communicate with each other via the network, which is not limited by the present disclosure. A data transmission from the network device 100 to the terminal 200 is referred to as a downlink data transmission, and a data transmission from the terminal 200 to the network device 100 is referred to as an uplink data transmission.

The system in the present disclosure may be applied to various communication systems, such as a 5th generation (5G) or new radio (NR) system, a long term evolution (LTE) system, an LTE frequency division duplex (FDD) system, an LTE time division duplex (TDD) system and future communication systems, which include, but not limited to, a sixth generation mobile communication system and a satellite communication system.

The network device 100 of the present disclosure may be: a base station, an evolved node B (eNB), a home base station, an access point (AP) in a wireless fidelity (WIFI) system, a wireless relay node, a wireless backhaul node, a transmission point (TP) or a transmission and reception point (TRP), etc. It may also be a gNB in the NR system; or, it may also be a component or a part of a device constituting a base station, such as a central unit (CU), a distributed unit (DU) or a baseband unit (BBU), etc.

The network device 100 of the present disclosure may have one or more cells, where the cell has resources for communicating with the terminal 200. The cell may have separate, overlapping or partially overlapping coverage areas. Each cell may be identified/distinguished by a physical cell identifier (PCI) for identifying the cell to the terminal 200.

The terminal 200 of the present disclosure may be fixed or mobile. FIG. 3 is only a schematic diagram, and the system may also include other network devices, such as a wireless relay device and a wireless backhaul device, which are not shown in FIG. 3. Types and quantities of network devices and terminals included in the system are not limited by the embodiments of the present disclosure.

The terminal 200 may also be referred to as a terminal, a user equipment (UE), a mobile station (MS), a mobile terminal (MT), etc.

The terminal 200 in the embodiments of the present disclosure may be a mobile phone, a tablet computer (Pad), a computer with wireless transceiving function, or a wireless terminal used in scenarios such as virtual reality (VR), augmented reality (AR), industrial control, self-driving, remote medical, smart grid, transportation safety, smart city, and smart home. In the present disclosure, the aforementioned terminal and a chip applicable to the aforementioned terminal are collectively referred to as terminal. It should be understood that a specific technology and a specific device form adopted by the terminal 200 are not limited in the embodiments of the present disclosure.

In order to improve the efficiency of data transmissions, carrier aggregation (CA) in 3GPP is introduced in the present disclosure. The carrier aggregation means that the terminal 200 may use at least two component carriers (CC) for an uplink data transmission and a downlink data transmission to achieve high-speed data transmission. In carrier aggregation, each component carrier corresponds to an independent cell, and the independent cells may include a primary cell (Pcell) and a secondary cell (Scell). The primary cell handles tasks such as security, handover, uplink physical control channel bearing, while other cells participating in the aggregation may be secondary cells, which are responsible for data transmission and do not involve security, handover, etc. In a case that the terminal 200 is configured with a carrier aggregation capability, a serving cell(s) currently serving the terminal 200 may include a primary cell and a secondary cell, that is, the serving cell(s) is composed of a primary cell and a secondary cell.

Based on the above embodiments, in order to reduce the delay of cell handover in LTM, beam information of a target cell needs to be pre-configured for the terminal as soon as possible in the present disclosure. This facilitates the terminal to perform uplink and downlink data transmissions with the target cell based on the beam information as soon as possible after a cell handover. Several embodiments about possible application scenarios related to beam information configuration are introduced below.

Reference is made to FIG. 4(a), which is a schematic diagram of an application scenario according to an exemplary embodiment. As shown in FIG. 4(a), in order to prevent the terminal 200 from processing an RRC configuration parameter of each candidate cell in advance, beam information of the candidate cell may be configured independently of RRC configuration parameters of the source cell and the candidate cell. The source cell refers to a serving cell(s) where the terminal currently camps, and the serving cell(s) may include a primary cell and a secondary cell. The present disclosure does not limit the number of candidate cells, which may be determined according to actual conditions. In a case that there are multiple candidate cells, the multiple candidate cells may be referred to as a candidate cell set (candidate cells). An example is given in the figure that the candidate cell set including n candidate cells, which may be expressed as: candidate cell 1 to candidate cell n, where n is a positive integer greater than 1. The beam information of n candidate cells may be referred to as a beam information list, which includes beam information of each candidate cell. The RRC configuration parameters in the figure may include an RRC configuration parameter of each cell, which also includes the beam information of each candidate cell.

The RRC configuration parameters involved in the present disclosure indicate radio resources allocated by the network device 100. Depending on the actual situation, they may include, but not limited to, resource parameters obtained during RRC connection establishment between the terminal 200 and the network device 100, a type of beam information, an uplink transmission configuration parameter, a downlink transmission configuration parameter or other custom parameters, etc.

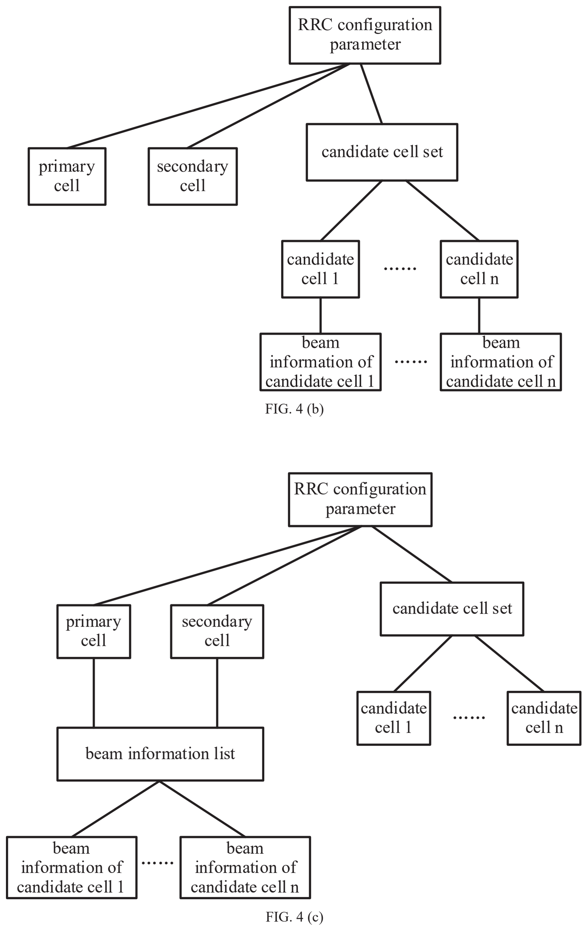

Reference is made to FIG. 4(b), which is a schematic diagram of another application scenario according to an exemplary embodiment. As shown in FIG. 4(b), the beam information of the candidate cell may be configured in an RRC configuration parameter of a corresponding candidate cell. Taking n candidate cells as an example in this figure of the present disclosure, beam information of candidate cell 1 may be configured in an RRC configuration parameter of candidate cell 1. Similarly, by analogy, beam information of candidate cell n may be configured in an RRC configuration parameter of candidate cell n in the present disclosure. For content not introduced in this embodiment, reference can be made to the relevant introduction in the embodiment of FIG. 4(a), which will not be repeated here.

Reference is made to FIG. 4(c), which is a schematic diagram of another application scenario according to an exemplary embodiment. As shown in FIG. 4(c) of the present disclosure, beam information of all candidate cells may be configured in an RRC configuration parameter of the source cell. Taking n candidate cells as an example in this figure of the present disclosure, beam information of n candidate cells may be referred to as a beam information list, which includes beam information of the n candidate cells. The source cell refers to a serving cell(s) currently serving the terminal, and the serving cell(s) may include a primary cell and a secondary cell. For content not introduced in this embodiment, reference can be made to the relevant introduction in the embodiment of FIG. 4(a), which will not be repeated here.

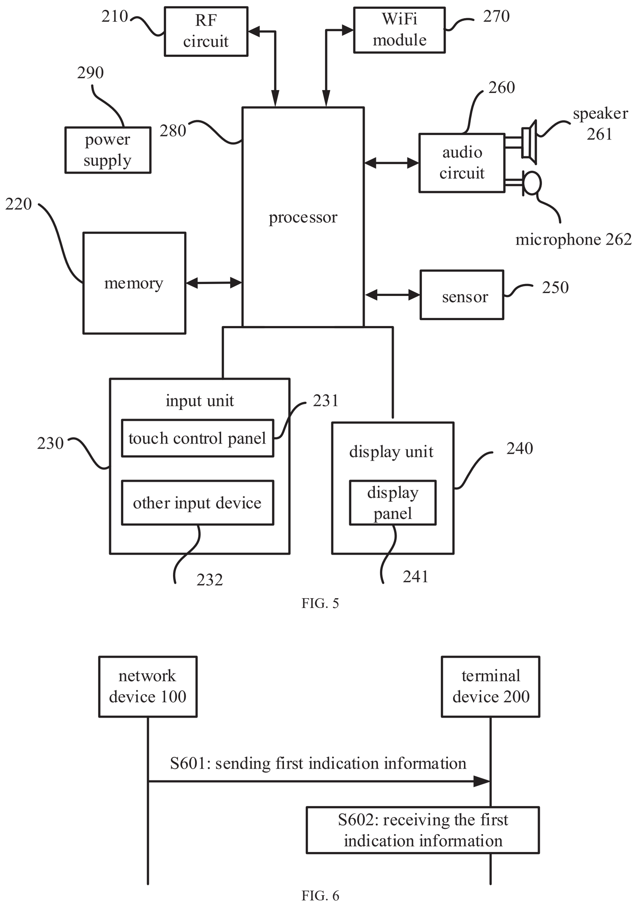

Reference is made to FIG. 5, which is a schematic structural diagram of a terminal according to an exemplary embodiment. The terminal 200 as shown in FIG. 5 may include components such as a radio frequency (RF) circuit 210, a memory 220, an input unit 230, a display unit 240, a sensor 250, an audio circuit 260, a wireless fidelity (WiFi) module 270, a processor 280, and a power supply 290. Those skilled in the art will appreciate that the device structure shown in FIG. 5 does not constitute a limitation onto the terminal, which may include more or fewer components as compared with the components illustrated in FIG. 5, or have some components combined, or use a different arrangement of the components.

Various components of the terminal 200 will be introduced below in detail in conjunction with FIG. 5.

The RF circuit 210 may be configured to receive and send signals during information or call reception and transmission. Specifically, the RF circuit delivers the downlink information received from a base station to the processor 280 for processing, and transmits designed uplink data to the base station. Generally, the RF circuit 210 includes but is not limited to an antenna, at least one amplifier, a transceiver, a coupler, a low noise amplifier (LNA), a duplexer, etc. In addition, the RF circuit 210 may also communicate with the network and other devices via wireless communication. The above wireless communication may use any communication standard or protocol, which includes but is not limited to: Global System of Mobile communication (GSM), General Packet Radio Service (GPRS), Code Division Multiple Access (CDMA), Wideband Code Division Multiple Access (WCDMA), Long Term Evolution (LTE), Email, Short Messaging Service (SMS), etc.

The memory 220 may be configured to store software programs and modules. The processor 280 is configured to execute various functional applications and data processing of the terminal by running the software program and module stored in the memory 220. The memory 220 may mainly include a program storage area and a data storage area. The program storage area may store an operating system, an application required for at least one function (such as a sound playback function, an image playback function, etc.), etc. The data storage area may store, for example, data established according to the use of the mobile phone (for example, audio data, telephone book). In addition, the memory 220 may include a high-speed random access memory and a nonvolatile memory, such as at least one magnetic disk memory, a flash memory, or other volatile solid-state memory.

The input unit 230 may be configured to receive input numeric or character information, and to generate a key signal input related to user setting and function control of the terminal. Specifically, the input unit 230 may include a touch control panel 231 and other input device 232. The touch control panel 231 is also referred to as a touch screen, which may collect a touch operation thereon or near it (for example, an operation on or around the touch control panel 231 that is made by a user with a finger, a touch pen and any other suitable object or accessory), and drive corresponding connection devices according to a pre-set procedure. Optionally, the touch control panel 231 may include a touch detection device and a touch controller. The touch detection device detects touch orientation of a user, detects a signal generated by the touch operation, and transmits the signal to the touch controller. The touch controller receives touch information from the touch detection device, converts the touch information into touch coordinates and transmits the touch coordinates to the processor 280. The touch controller may also receive a command from the processor 280 and execute the command. In addition, the touch control panel 231 may be implemented by, for example, a resistive panel, a capacitive panel, an infrared panel and a surface acoustic wave panel. In addition to the touch control panel 231, the input unit 230 may also include other input devices 232. Specifically, the other input device 232 may include but not limited to one or more of a physical keyboard, a function key (such as a volume control button, a switch button), a trackball, a mouse and a joystick.

The display unit 240 may be configured to display information input by a user or information provided to the user and various menus of the terminal. The display unit 240 may include a display panel 241. Optionally, the display panel 241 may be formed in a form of a Liquid Crystal Display (LCD), an Organic Light-Emitting Diode (OLED) or the like. In addition, the display panel 241 may be covered by the touch control panel 231. When the touch control panel 231 detects a touch operation thereon or near it, the touch control panel 231 transmits the touch operation to the processor 280 to determine the type of the touch event, and then the processor 280 provides a corresponding visual output on the display panel 241 according to the type of the touch event. Although the touch control panel 231 and the display panel 241 implement the input and output functions of the terminal as two separate components in FIG. 4, the touch control panel 231 and the display panel 241 may be integrated together to implement the input and output functions of the terminal in other embodiments.

The terminal may also include at least one sensor 250, such as an optical sensor, a motion sensor and other sensors. The optical sensor may include an ambient light sensor and a proximity sensor. The ambient light sensor may adjust the luminance of the display panel 241 according to the intensity of ambient light, and the proximity sensor may close the backlight or the display panel 241 when the terminal is approaching to the ear. As a kind of motion sensor, a gravity acceleration sensor may detect the magnitude of acceleration in multiple directions (usually three-axis directions) and detect the value and direction of the gravity when the sensor is in the stationary state. The acceleration sensor may be applied in, for example, an application of terminal pose recognition (for example, switching between landscape and portrait, a correlated game, magnetometer pose calibration), a function about vibration recognition (for example, a pedometer, knocking). Other sensors such as a gyroscope, a barometer, a hygrometer, a thermometer, an infrared sensor, which may be further provided in the terminal, are not described herein.

The audio circuit 260, a speaker 261, and a microphone 262 may provide an audio interface between the user and the terminal. The audio circuit 260 may transmit an electric signal, converted from received audio data, to the speaker 261, and a voice signal is converted from the electric signal and then outputted by the speaker 261. The microphone 262 converts captured voice signal into an electric signal, the electric signal is received by the audio circuit 260 and converted into audio data. The audio data is outputted to the processor 280 for processing and then sent to another terminal via the RF circuit 210; or the audio data is outputted to the memory 220 for further processing.

WiFi is a short-range wireless transmission technique. The terminal may help the user to, for example, send and receive E-mail, browse a webpage and access a streaming media via the WiFi module 270, and provide wireless broadband Internet access for the user. Although the WiFi module 270 is shown in FIG. 4, it can be understood that the WiFi module is not necessary for the terminal, and may be omitted as needed without departing from the scope of the present disclosure.

The processor 280 is a control center of the terminal, which connects various parts of the mobile phone by using various interfaces and wires, and implements various functions and data processing of the terminal by running or executing the software programs and/or modules stored in the memory 220 and invoking data stored in the memory 220, thereby monitoring the terminal as a whole. Optionally, the processor 280 may include one or more processing cores. Preferably, an application processor and a modem processor may be integrated into the processor 280. The application processor is mainly used to process, for example, an operating system, a user interface and an application. The modem processor is mainly used to process wireless communication. It can be understood that the above modem processor may not be integrated into the processor 280.

The terminal also includes the power supply 290 (such as a battery) for powering various components. Preferably, the power supply may be logically connected with the processor 280 via a power management system, therefore, functions such as charging, discharging and power management are implemented by the power management system. Although not shown, the terminal 200 may also include a camera, a Bluetooth module and so on, which are not described herein.

Based on the above embodiments, a method embodiment involved in the present disclosure is introduced below.

Reference is made to FIG. 6, which is a flow chart of a beam indication method according to an exemplary embodiment. The method shown in FIG. 6 is applied to the above communication system, and the method includes the following steps.

In step S601, a network device 100 sends first indication information to a terminal 200, where the first indication information at least includes beam information of at least one target cell, the beam information indicates a transmission beam for an uplink data transmission and a downlink data transmission between a terminal and the at least one target cell, the at least one target cell is a cell selected from at least one candidate cell based on a beam measurement result, and the candidate cell is a cell pre-configured for the terminal based on a radio resource management measurement result.

The beam measurement result involved in the present disclosure is also referred to as layer 1 measurement result (L1 measurement result), which may include but are not limited to, for example, Ll-RSRP, or L1-SINR, etc. The radio resource management measurement result is also referred to as cell measurement result, or layer 3 measurement result (L3 measurement result). The Radio Resource Management (RRM) measurement result may be predefined in a protocol, and may be a measurement result obtained by first performing average on beam measurement information of a cell and then applying a predefined L3 filtering formula for L3 filtering processing. To some extent, it can be understood that the beam measurement result describes instantaneous/real-time measurement information of the cell, while the RRM measurement result describes average measurement information of the cell, which is not limited in the present disclosure.

The network device 100 may pre-configure one or more candidate cells for the terminal 200 based on the RRM measurement result. The present disclosure does not limit the method for configuring the candidate cells. For example, the network device 100 may prioritize configuring a cell with a better signal quality as the candidate cell based on a signal quality strength of each cell in the RRM measurement result.

The aforementioned first indication information involved in the present disclosure may be carried and sent by a cell handover command, to simultaneously instruct the terminal 200 to perform a cell handover, specifically to switch from the source cell to the at least one target cell. The first indication information may at least include the beam information of the at least one target cell.

In step S602, the terminal 200 receives the first indication information sent by the network device 100.

After obtaining the above-mentioned first indication information, the terminal 200 may perform corresponding uplink and downlink data transmissions based on the beam information of the at least one target cell in the first indication information. For example, the terminal 200 may receive downlink data sent by the network device 100 based on the transmission beam indicated by the beam information of the at least one target cell. For another example, the terminal 200 may send corresponding uplink data to the network device 100 based on the transmission beam indicated by the beam information of the at least one target cell.

By implementing the embodiments of the present disclosure, the network device sends the first indication information, the first indication information at least includes the beam information of the at least one target cell, the beam information indicates the transmission beam for the uplink data transmission and the downlink data transmission between the terminal and the at least one target cell, the at least one target cell is the cell selected from at least one candidate cell according to the beam measurement result, and the candidate cell is the cell pre-configured for the terminal according to the radio resource management measurement result. Correspondingly, the terminal receives the first indication information, and then performs the uplink data transmission and the downlink data transmission with the at least one target cell according to the transmission beam indicated by the first indication information. In this way, the network device can indicate the beam information of the at least one target cell to the terminal simultaneously upon triggering a handover, facilitating faster uplink and downlink data transmissions between the terminal and the target cell after receiving the cell handover command, so as to reduce a data transmission interruption time during the handover, thereby improving the efficiency of data transmission.

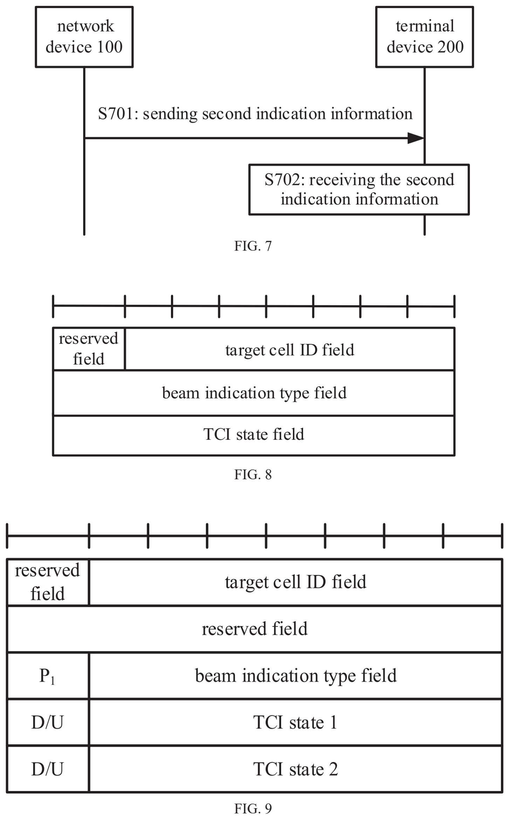

Reference is made to FIG. 7 which is a flow chart of another beam indication method according to an exemplary embodiment. The method shown in FIG. 7 includes the following steps.

In step S701, a network device 100 sends second indication information to a terminal 200, where the second indication information indicates a type of beam information of the above at least one target cell.

In step S702, the terminal 200 receives the second indication information sent by the network device 100.

The second indication information involved in the present disclosure indicates the type of the beam information of the at least one target cell, which may also be referred to as a beam indication type of the at least one target cell. After receiving the above second indication information, the terminal 200 may obtain the beam indication type (i.e., the type of beam information) of the above target cell. The beam indication type includes a joint beam indication and/or a separate beam indication.

In a case that the above-mentioned beam indication type is a joint beam indication, the above-mentioned first indication information includes a joint transmission configuration indicator (TCI) status (TCI status). The joint TCI status is used to simultaneously determine (i.e., indicate) transmission beam(s) for the uplink data transmission and the downlink data transmission between the terminal 200 and the at least one target cell. Optionally, in a case that the above-mentioned beam indication type is a separate beam indication, the above-mentioned first indication information includes an uplink TCI status and a downlink TCI status, and the uplink TCI status is used to determine (i.e., indicate) the transmission beam for the uplink data transmission between the terminal 200 and the at least one target cell, and the downlink TCI status is used to determine (i.e., indicate) the transmission beam for the downlink data transmission between the terminal 200 and the at least one target cell. The TCI status involved in the present disclosure is used to carry/indicate beam information of a corresponding cell. In an actual application, the TCI status includes a reference signal of the corresponding cell, and a transmission beam of the reference signal is used as a beam for data transmission. The present disclosure does not elaborate or limit this further here.

The present disclosure does not limit an execution order of the above steps S601 and S701, which may be determined according to actual conditions. For example, in one example, the present disclosure may first execute step S701 to send the second indication information, and then execute step S601 to send the first indication information. In another example, the present disclosure may simultaneously execute the above steps S601 and S701, that is, simultaneously send the first indication information and the second indication information, for example, carry them in a same signaling, which is not limited by the present disclosure.

The present disclosure does not limit respective transmission methods for the second indication information and the first indication information. For example, the above-mentioned first indication information and the above-mentioned second indication information may be carried in the same signaling for sending; or they may be carried in different signalings for sending. For example, the above-mentioned first indication information is carried in a first signaling, and the above-mentioned second indication information is carried in a second signaling for sending, and the first signaling and the second signaling are different.

The first signaling involved in the present disclosure may be a signaling for beam indication, and the first signaling may be a cell handover command. In practical applications, the first signaling may be carried in, but not limited to, a downlink control information (DCI) signaling or a medium access control control element (MAC CE) signaling. The second signaling may be a signaling for transmitting second indication information, and the signaling may be a configuration signaling, such as an RRC signaling; it may also be an activation signaling, such as another RRC signaling; it may also be other signaling determined according to actual conditions, etc., which is not limited in the present disclosure.

Reference is made to FIG. 8, which is a schematic diagram of a format of a MAC CE signaling according to an exemplary embodiment. As shown in FIG. 8, the MAC CE signaling may include a target cell identity (Target cell ID) field and a TCI state field (TCI state). Optionally, the MAC CE signaling may also include a beam indication type field, denoted as P1 in this figure. Optionally, the MAC CE signaling may also include a reserved (R) field.

The present disclosure does not limit a length of each field and a number of fields, which may be determined according to actual conditions. Usually, the MAC CE signaling includes a target cell identity field and a beam indication type field. The target cell identity field indicates an identity of the at least one target cell, such as a PCI of the at least one target cell. The TCI state field carries a TCI state identifier (i.e., TCI state ID) of the at least one target cell, which indicates the transmission beam for the uplink data transmission and the downlink data transmission between the terminal 200 and the at least one target cell. The beam indication type field indicates a type of the TCI state, that is, to indicate a type of the beam information of the at least one target cell, which may include the separate beam indication and the joint beam indication. A representation form of the beam indication type field is not limited in the present disclosure, which may be represented in a form of a number, a letter, a character, or a combination thereof. For example, in a case that the beam indication type field is 0/1, it may represent the joint beam indication; in a case that it is 1/0, it may represent the separate beam indication.

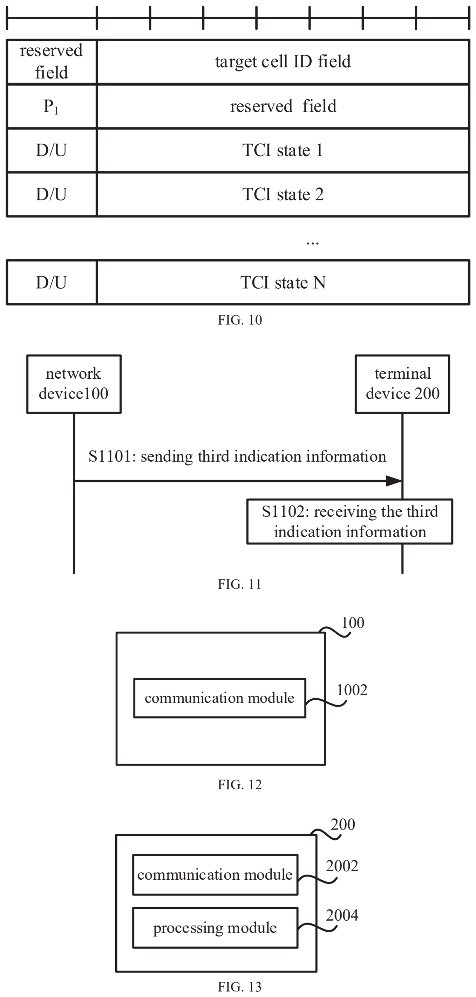

Optionally, in a case that the beam indication type field is the joint beam indication, the TCI state field is used to carry a joint TCI state identifier (joint TCI state ID) for simultaneously indicating transmission beams for the uplink data transmission and the downlink data transmission between the terminal 200 and the at least one target cell; in a case that the beam indication type field is a separate beam indication, the TCI state field is used to carry an uplink TCI state identifier (UL TCI state ID) and a downlink TCI state identifier (DL TCI state ID). The uplink TCI state identifier indicates the transmission beam for the uplink data transmission between the terminal 200 and the at least one target cell, and the downlink TCI state identifier indicates the transmission beam for the downlink data transmission between the terminal 200 and the at least one target cell. Reference is made to FIG. 9 and FIG. 10 below, which are schematic diagrams showing other two formats of the MAC CE signaling according to exemplary embodiments. FIG. 9 shows that in a case that the above-mentioned first signaling (cell handover command) is a MAC CE signaling, the MAC CE signaling may include a target cell identity field, a beam indication type field and a TCI state field. Optionally, it may also include a reserved field. For the description of each field, reference can be made to the description in the aforementioned embodiment described in the FIG. 8, and will not be repeated here. An example is given in this figure that the beam indication type field is the separate beam indication, and the TCI state field includes two TCI state identifiers, labeled in the figure as: TCI state 1 and TCI state 2. In a case that TCI state 1 is a UL TCI state, TCI state 2 is a DL TCI state; conversely, in a case that TCI state 1 is a DL TCI state, TCI state is a UL TCI state. In this figure, "D" represents downlink, and "U" represents uplink. Alternatively, in the absence of uplink and downlink indication (D/U), the first TCI state identifier is default to the DL TCI state ID, and the second TCI state identifier is default to the UL TCI state ID; or the first TCI state identifier is default to the UL TCI state ID, and the second TCI state identifier is default to the DL TCI state ID, etc., which may be set according to actual conditions and is not limited in the present disclosure.

FIG. 10 shows that in a case that the second signaling (activation signaling) is a MAC CE signaling, the MAC CE signaling may include a target cell identity field, a beam indication type field and a TCI state field. Optionally, it may also include a reserved field. For the description of each field, reference can be made to the introduction in the above embodiment described in FIG. 8, and will not be repeated here. In a case that the beam indication type is the joint beam indication, the TCI state field in the MAC CE signaling may include 8 joint TCI state identifiers; conversely, in a case that the beam indication type is the separate beam indication, the TCI state field may include 8 uplink TCI state identifiers and 8 downlink TCI state identifiers, and the uplink TCI state identifier and the downlink TCI state identifier appear in pairs. The number 8 here is merely for illustration, may be adjusted according to actual needs and does not constitute any limitation. An example is given in this figure that the TCI state field includes N TCI state identifiers, which are respectively represented as: TCI state 1 (TCI state ID 1) to TCI state N (TCI state ID N), where N is a positive integer customized according to actual needs of the system. For example, in this embodiment, in a case that the above-mentioned beam indication type is the joint beam indication, N=8; in a case that the above-mentioned beam indication type is the separate beam indication, N=16.

It should be noted that in a case that the above-mentioned second signaling is a MAC CE signaling (activation signaling), the activation signaling indicates cells which have TCI states to be activated, including at least the TCI state of the at least one target cell. In this case, the above-mentioned first signaling (i.e., the above-mentioned first indication information) includes a TCI state field (i.e., the indication field) of the at least one target cell, and the TCI state field of the at least one target cell indicates one TCI state or a pair of TCI states for the terminal 200 from the activated TCI states, that is, to indicate the TCI state of the at least one target cell. Accordingly, after receiving the above-mentioned first indication information, the terminal 200 may obtain the TCI state of the at least one target cell corresponding to a code point value based on the code point value of the TCI state field and a TCI correspondence indicated by the above-mentioned second signaling. The TCI correspondence includes a correspondence between the code point value and the TCI state identifier, which is not described and limited in detail here.

Some optional embodiments applicable to both the embodiments described in FIG. 6 and FIG. 7 are described below.

In different application scenarios, implementation methods of the above-mentioned beam indication (in steps S601 and S701) may be different. For example, in the application scenario shown in FIG. 4(c), the beam information of the at least one target cell (i.e., the TCI state of the at least one target cell) may be configured in an RRC configuration parameter of a source cell, and the source cell refers to the serving cell where the terminal 200 currently camps. In this case, the network device 100 may reuse a type of beam information of the source cell, that is, the type of the beam information of the at least one target cell in step S701 is the same as the type of the beam information of the source cell. Accordingly, when sending the first indication information in step S601, the network device 100 may send the above-mentioned first indication information based on the type of the beam information of the source cell, where the type of beam information of the above-mentioned target cell is the same as the type of the beam information of the source cell.

For another example, in the application scenario shown in FIG. 4(b), the beam information of the at least one target cell (i.e., the TCI state of the at least one target cell) may be configured in an RRC configuration parameter of the at least one target cell. In this case, another implementation of the above step S701 may be that the network device 100 may pre-configure the type of the beam information of the at least one target cell for the terminal 200, for example, the above second indication information (specifically, the type of the beam information of the at least one target cell) may be carried in a third signaling (e.g., an RRC signaling) and sent to the terminal 200 in advance. In this scenario, both the terminal 200 and the network device 100 already know the type of the beam information of the at least one target cell. Accordingly, when sending the first indication information in step S601, the network device 100 may send the first indication information based on the type of the beam information of the at least one target cell, and specifically, the first indication information may be carried in a fourth signaling and sent to the terminal 200. For description of the third signaling, reference can be made to the relevant introduction of the aforementioned second signaling, and for description of the fourth signaling, reference can be made to the relevant introduction in the aforementioned first signaling, which will not be repeated here.

For another example, in the application scenario shown in FIG. 4(a), the beam information of the at least one target cell is configured independently of an RRC configuration parameter of the source cell and an RRC configuration parameter of the candidate cell. In this case, another implementation of step S701 may be that the network device 100 may directly send the second indication information, for example, the second indication information and the first indication information may be carried in the same signaling or in different signaling and sent to the terminal 200, etc., which may be determined according to actual conditions and is not limited in the present disclosure. The implementation methods of beam indication in different application scenarios will be elaborated below in detail case by case in the present disclosure.

In some embodiments, the beam information of the present disclosure may be indicated through a TCI state indication. In a case that the beam information is carried in a first indication field of the first indication information, the transmission beam indicated by the above beam information may be used to transmit all channels or signals between the terminal 200 and the at least one target cell. In other words, the transmission beam of the at least one target cell indicated by using the TCI state indication supports transmission of all channels or signals by default.

In some embodiments, in a case that the beam information of the present disclosure is carried in a second indication field of the second indication information, the transmission beam indicated by the above beam information is used to transmit a designated channel or a designated signal between the terminal 200 and the at least one target cell. The designated channel is a transmission channel defined by the system, which may include, but not limited to, a downlink control channel, such as a physical downlink control channel (PDCCH). The designated signal is a transmission signal defined by the system, which may include, but not limited to, a downlink control signal, such as a physical downlink control PDCCH signal. The first indication field and the second indication field involved in the present disclosure are different. The second indication field is a beam indication field newly introduced in the present disclosure, for example, using a preset reserved field for indication, etc., which is not limited in the present disclosure.

That is to say, for channels or signals not indicated by the TCI state, the present disclosure may reuse the unified TCI framework mechanism (R17 unified TCI framework) for determination. For example, a corresponding second indication field (i.e., beam indication field) is newly introduced into the second indication information for indication. For example, taking PDCCH as an example, a new unified TCI state (follow Unified TCI State) may be used to indicate a transmission beam of a PDCCH transmission, etc. Alternatively, after switching to the at least one target cell, the at least one target cell may provide the indication. For example, the at least one target cell sends a configuration signaling for indication.

In addition, for other channels or signals not indicated by the TCI state, the present disclosure may obtain the beam information of the at least one target cell from the RRC configuration parameter of the at least one target cell. For example, the terminal 200 may obtain the RRC configuration parameter of the at least one target cell, and then may obtain the beam information of the at least one target cell.

In some implementations, in the application scenario shown in FIG. 4(b) above, the beam information of the at least one target cell is configured in the RRC configuration parameter of the at least one target cell, and the first indication information may include a target reference signal of the at least one target cell, and a beam corresponding to the target reference signal is the transmission beam for the uplink data transmission and the downlink data transmission between the terminal 200 and the at least one target cell. In other words, the terminal 200 and the at least one target cell may perform the uplink data transmission and the downlink data transmission based on the beam corresponding to the target reference signal.

In some embodiments, the target reference signal involved in the present disclosure may include a first reference signal and a second reference signal, and the two reference signals indicates the terminal 200 and the at least one target cell to perform the uplink data transmission and the downlink data transmission, respectively. For example, the first reference signal may indicate that the terminal 200 and the at least one target cell perform the uplink data transmission based on a beam corresponding to the first reference signal, and the second reference signal may indicate that the terminal 200 and the at least one target cell perform the downlink data transmission based on a beam corresponding to the second reference signal; or the first reference signal may indicate that the terminal 200 and the at least one target cell perform the downlink data transmission based on the beam corresponding to the first reference signal, and the second reference signal may indicate that the terminal 200 and the at least one target cell perform the uplink data transmission based on the beam corresponding to the second reference signal; it may be set according to actual conditions, and is limited present disclosure. That is, the beam corresponding to the first reference signal may be a transmission beam for uplink/downlink data transmission between the terminal 200 and the at least one target cell, and the beam corresponding to the second reference signal may be a transmission beam for downlink/uplink data transmission between the terminal 200 and the at least one target cell, where data transmission directions indicated by the first reference signal and the second reference signal are different.

The reference signal involved in the present disclosure refers to a reference signal that can be used to reflect the corresponding beam information, which may include, but not limited to, a Synchronization Signal and PBCH block (SSB), a Channel State Information Reference Signal (CSI-RS), a Demodulation Reference Signal (DMRS), or other reference signals for indicating the beam information.

In some implementations, in order to accelerate the efficiency of data transmissions, the carrier aggregation technique may be introduced into the present disclosure. In the carrier aggregation, the at least one target cell may include a primary cell (Pcell) and a secondary cell (Scell), and the beam information may indicate transmission beams of all cells constituting the at least one target cell. That is, the beam information indicates by default all transmission beams used to determining the at least one target cell.

The numbers of primary cells and secondary cells are not limited in the present disclosure. In the carrier aggregation, one primary cell and at least one secondary cell are usually included. For functions of the primary cell and the secondary cell, reference can be made to the relevant description in the above embodiment described in FIG. 3, which will not be repeated here.

In some embodiments, in special application scenarios, the beam indication method under the carrier aggregation may not adopt the above-mentioned default indication method. For example, in the application scenario of FIG. 4 (a) above, in a case that the beam information of the at least one target cell is configured independently of RRC configuration parameters of the source cell and the candidate cell, and the at least one target cell in the carrier aggregation includes a primary cell (Pcell) and a secondary cell (Scell), the network device 100 may also introduce new indication information or signaling for indication. Reference is made to FIG. 11, which is a flow chart of another beam indication method according to an exemplary embodiment. The method shown in FIG. 11 includes the following steps.

In step S1101, a network device 100 sends third indication information to a terminal 200, where the third indication information indicates one or more cells within the at least one target cell that support simultaneously applying the beam information.

In step S1102, the terminal 200 receives the third indication information sent by the network device 100.

By introducing new third indication information (which may also be an indication signaling), the network device 100 of the present disclosure can indicate one or more cells within the at least one target cell whose transmission beams may be indicated simultaneously, when configuring the beam information of the at least one target cell. Correspondingly, the terminal 200 may receive the third indication information and may obtain one or more cells within the at least one target cell that support simultaneously applying the beam information, that is, obtain one or more cells or transmission beams corresponding to the cells that support simultaneous data transmission in the carrier aggregation.

The sending method of the third indication information is not limited in the present disclosure. For example, in the present disclosure, the third indication information and the first indication information may be carried in different signalings, for example, the first indication information is carried in a first signaling, and the third indication information is carried in a third signaling. The third signaling includes but is not limited to an RRC signaling. For the description of the first signaling, reference can be made to the relevant introduction in the aforementioned embodiment, which will not be repeated here. For another example, in the present disclosure, the third indication information and the second indication information may be carried in the same signaling, or in different signalings. It may be determined according to an actual situation, and the present disclosure does not limit it.

In some embodiments of the present disclosure, the unified TCI framework mechanism (R17 unified TCI framework) may be reused, and a new beam application time is introduced to obtain the beam information of the at least one target cell. For example, in a case that the above beam information is indicated by using a TCI state, the R17 unified TCI framework mechanism may be reused in the present disclosure, and a new beam application time is introduced to determine the beam information of the at least one target cell. In a specific implementation, the terminal 200 may obtain the RRC configuration parameter of the at least one target cell, and then may obtain the beam information of the at least one target cell based on the RRC configuration parameter of the at least one target cell.

In an actual application, the terminal 200 may report/send the corresponding beam application time to the network device 100, and the beam application time at least includes a time required by the terminal 200 to obtain/read the RRC configuration parameter of the at least one target cell. Correspondingly, the network device 100 receives the beam application time, so both the terminal 200 and the network device 100 are aware of the beam application time. The beam application time indicates a minimum interval time or a minimum waiting time for the terminal 200 and the at least one target cell to perform the uplink data transmission and the downlink data transmission based on the beam information. In other words, the terminal 200 and the at least one target cell need to wait for the above beam application time before they can perform the uplink data transmission and the downlink data transmission based on the above beam information of the at least one target cell.

The implementation method of the terminal 200 obtaining the corresponding beam information based on the RRC configuration parameter of the at least one target cell may differ across application scenarios. For example, in the application scenario shown in FIG. 4 (b) above, the beam information of the at least one target cell is configured in the RRC configuration parameter of the at least one target cell. In this case, the terminal 200 needs to obtain the RRC configuration parameter of the at least one target cell after receiving the cell handover command (cell switch command) sent by the network device 100, and then obtains the above beam information of the at least one target cell. The cell handover command instructs the terminal 200 to switch from the source cell to the at least one target cell.

To better understand the embodiments of the present disclosure, implementations of the above beam indication method will be exemplarily described below according to three application scenarios described in FIG. 4(a) to FIG. 4(c). For each application scenario, implementation of the beam indication may be introduced in embodiments of the present disclosure from the following three aspects: a beam indication type (i.e., a type of the beam information), a channel or a signal using beam indication, and a beam indication under the carrier aggregation.

First application scenario: the beam information of the at least one target cell is independent of an RRC configuration parameter of the source cell and RRC configuration parameters of all candidate cells.

In this application scenario, the beam information of the candidate cell may be indicated by a transmission configuration indicator status (TCI status). Beam information (i.e., TCI statuses) of multiple candidate cells may be configured to the terminal in advance. TCI statuses of different candidate cells may use the same TCI state identifier (i.e., TCI status ID), and may be distinguished by a physical cell identifier (PCI) or a logical ID of a cell; or TCI statuses of different candidate cells may be distinguished by different TCI state identifiers (TCI status IDs).

### Beam indication type:

In the beam indication procedure, several possible implementations or cases of the beam indication type involved in the present disclosure will be introduced by taking the above first indication information including the beam information of the at least one target cell as an example.

In a first manner, the network device 100 and the terminal 200 may default to the above beam indication type as a joint beam indication. Correspondingly, the beam information of the at least one target cell may be indicated by a joint TCI state. The joint TCI state included in the above first indication information may be used for the uplink data transmission and the downlink data transmission between the terminal 200 and the at least one target cell.

In a second manner, when configuring a TCI state of a corresponding cell (for example, the TCI state of the at least one target cell), the beam indication type is clearly configured as a joint beam indication or a separate beam indication according to an actual situation. That is, the first indication information and the second indication information are simultaneously carried in the same signaling for configuration.

In a third manner, when the first indication information indicates the TCI state, it simultaneously indicates whether the corresponding beam indication type is a joint beam indication or a separate beam indication.

If the beam indication type is a joint beam indication, the first indication information includes a joint TCI state identifier; and otherwise, the first indication information includes two TCI state identifiers. Usually, a first TCI state identifier may be defaulted to be an uplink TCI state identifier (UL TCI state ID), and a second TCI state identifier may be a downlink TCI state identifier (DL TCI state ID). Alternatively, the first TCI state identifier is defaulted to be the downlink TCI state identifier, and the second TCI state identifier is the uplink TCI state identifier. Alternatively, it may be explicitly configured/indicated, based on an actual situation, which TCI state is for uplink and which TCI state is for downlink. Referring to the example shown in FIG. 9 above, the network device 100 of the present disclosure may carry the above first indication information in a MAC CE signaling shown in FIG. 9 and may send it to the terminal 200, to indicate the beam indication type of the at least one target cell.

In a fourth manner, a new indication information or signaling (for example, the present disclosure introduces new second indication information) is designed/introduced to indicate whether the corresponding beam indication type is a joint beam indication or a separate beam indication.

In a practical application, a new TCI state activation signaling is introduced in the present disclosure, the above-mentioned second indication information is carried in the TCI state activation signaling, so as to indicate whether the corresponding beam indication type is a joint beam indication or a separate beam indication while activating the TCI state of the at least one target cell. Specifically, the network device 200 needs to activate the TCI state of the at least one target cell in advance before sending a cell handover command, and a corresponding beam indication type is indicated in the activation signaling. The activation signaling includes but is not limited to a MAC CE signaling, or other signaling for activating the TCI state. Referring to the example shown in FIG. 10 above, the network device 100 of the present disclosure may carry the above second indication information in the MAC CE signaling (activation signaling) shown in FIG. 10 and send it to the terminal 200, to indicate activating of the TCI state of the at least one target cell and indicate the corresponding beam indication type at the same time.

### Channel or signal using beam indication:

The channel or the signal supported/applicable for the beam information of the at least one target cell will be introduced below. There may be the following implementations or cases.

In a first manner, it is usually default that all channels or signals may be indicated by the TCI state of the at least one target cell. After switching to the at least one target cell, this indication may be updated according to a configuration of the at least one target cell. For example, the at least one target cell may reconfigure a transmission beam of the corresponding channel/signal by sending a configuration signaling. The present disclosure does not limit or elaborate on this herein.

That is, the transmission beam indicated by the TCI state of the at least one target cell in the present disclosure may be used to transmit all channels or signals between the terminal and the at least one target cell.

In a second manner, for channels or signals that do not use a TCI state indication, an R17 unified TCI state framework mechanism may be reused for determination. There are several possible beam indication methods as follows.
(1) For a downlink control channel/signal, such as a Physical Downlink Control Channel (PDCCH): the TCI state of the at least one target cell may be carried in a second indication field in the first indication information. That is, the second indication field is newly added into the first indication information. Alternatively, after handover to the at least one target cell, the indication may be provided by the at least one target cell itself. For example, the at least one target cell may indicate a transmission beam for the corresponding channel/signal by sending a new signaling, which is not limited or detailed in the present disclosure. However, before the at least one target cell provides such an indication, the terminal 200 shall be prohibited from receiving any uplink control channel/signal.
(2) For other signals: the indication may be obtained through the RRC configuration parameter of the at least one target cell. That is, the terminal 200 may obtain the indication by reading the RRC configuration parameter of the at least one target cell.

### Beam indication under carrier aggregation:

Several possible implementations or cases involving the beam indication under the carrier aggregation will be described below.

In a first manner, the TCI state of the at least one target cell is used, by default, for indicating transmission beams of all cells determining the at least one target cell. Under the carrier aggregation, the at least one target cell may include a primary cell and a secondary cell, that is, the TCI state of the at least one target cell is used by default to indicate the transmission beams of all cells constituting/determining the at least one target cell.

In a second manner, new indication information or a new signaling (for example, the third indication information is introduced in the present disclosure) is introduced, when configuring the TCI state, it is able to indicate one or more cells within the at least one target cell that support simultaneously applying the beam information. That is, the third indication information is introduced to indicate the cells or transmission beams of the cells simultaneously applying/using the above beam information (TCI state) within the at least one target cell.

In a third manner, an R17 unified TCI state framework mechanism is reused for determination, for which reference can be made to the relevant introduction in the aforementioned embodiments, and details will not be repeated here.

Second application scenario: the beam information of the at least one target cell is configured in the RRC configuration parameter of the at least one target cell.

In this application scenario, beam information of each candidate cell may be indicated by a reference signal or a TCI state, which are introduced below.

Case 1: using a reference signal to indicate the beam information of the at least one target cell.

The first indication information includes a target reference signal of the at least one target cell, such as an index of an SSB. In addition, the first indication information also needs to include a PCI or a configuration index of the at least one target cell to identify the at least one target cell. A beam corresponding to the target reference signal is used for the uplink data transmission and the downlink data transmission between the terminal 200 and the at least one target cell, that is, the beam corresponding to the target reference signal is the transmission beam for the uplink data transmission and the downlink data transmission between the terminal 200 and the at least one target cell.

Beam indication type: the default is a joint beam indication. In this case, the beam corresponding to the above-mentioned target reference signal is used, by default, for the transmission beam for the uplink data transmission and the downlink data transmission between the terminal 200 and the at least one target cell.

Alternatively, according to actual needs, whether the corresponding beam indication type is a joint beam indication or a separate beam indication is also indicated in the above-mentioned first indication information. In a case that the above-mentioned beam indication type is the joint beam indication, the target reference signal in the above-mentioned first indication information indicates the transmission beam for the uplink data transmission and the downlink data transmission between the terminal 200 and the at least one target cell. In a case that the above-mentioned beam indication type is the separate beam indication, the target reference signal in the above-mentioned first indication information includes a first reference signal and a second reference signal, which indicates transmission beams corresponding to the uplink data transmission and the downlink data transmission between the terminal 200 and the at least one target cell, respectively. For example, the first reference signal may indicate the transmission beam for the uplink data transmission between the terminal 200 and the at least one target cell, and the second reference signal may indicate the transmission beam for the downlink data transmission between the terminal 200 and the at least one target cell, which is not limited in the present disclosure.

Case 2: using the TCI state to indicate the beam information of the at least one target cell.

In this case, the terminal 200 needs to process an RRC configuration parameter of each candidate cell in advance, including the RRC configuration parameter of the at least one target cell. The RRC configuration parameter includes information such as the beam indication type and the beam indication under the carrier aggregation. In other words, the network device 100 may notify the RRC configuration parameter of each candidate cell in advance, including the beam indication type of the at least one target cell.

Accordingly, in a case that the beam indication type of the at least one target cell is a joint beam indication, the network device 100 may carry a joint TCI state in the first indication information, and send it to the terminal 200. Conversely, in a case that the beam indication type of the at least one target cell is a separate beam indication, the network device 100 may carry an uplink TCI state and a downlink TCI state in the first indication information and send it to the terminal 200.

Optionally, after receiving a cell handover command sent by the network device 100, the terminal 200 may obtain the RRC configuration parameter of the at least one target cell, and then may obtain the beam information of the at least one target cell based on the RRC configuration parameter of the at least one target cell, but a new beam application time needs to be introduced, which may correspondingly refer to the relevant introduction in the aforementioned embodiment and will not be repeated here.

Third application scenario: the beam information of the at least one target cell is configured in the RRC configuration parameter of the source cell.

In this application scenario, beam information of each candidate cell may be indicated by a TCI state, that is, the beam information of the at least one target cell may be indicated by the TCI state.

Beam indication type: the beam indication type of the at least one target cell is default to be a joint beam indication.

Alternatively, it is the same as a beam indication type of the source cell. In other words, beam indication types of the source cell and the at least one target cell are the same.

Channels or signals using a beam indication: they are the same as the channels or signals using the beam indication in the first application scenario, and are not described in detail in the present disclosure.

### Beam indication under carrier aggregation:

Several possible implementations or cases involving the beam indication under the carrier aggregation will be described below.

In a first manner, the TCI state of the at least one target cell is used, by default, for indicating transmission beams of all cells determining the at least one target cell. Under the carrier aggregation, the at least one target cell may include a primary cell and a secondary cell, that is, the TCI state of the at least one target cell is used by default to indicate the transmission beams of all cells constituting/determining the at least one target cell.

In a second manner, reusing an R17 unified TCI state framework mechanism for determination.

By implementing the embodiments of the present disclosure, the network device sends the first indication information, the first indication information at least includes the beam information of the at least one target cell, the beam information indicates the transmission beam for the uplink data transmission and the downlink data transmission between the terminal and the at least one target cell, the at least one target cell is the cell selected from at least one candidate cell according to the beam measurement result, and the candidate cell is the cell pre-configured for the terminal according to the radio resource management measurement result. Correspondingly, the terminal receives the first indication information, and then performs the uplink data transmission and the downlink data transmission with the at least one target cell according to the transmission beam indicated by the first indication information. Evidently, the network device can directly indicate the beam information of the at least one target cell in the first indication information. In this way, it is convenient and efficient to indicate the beam information of the at least one target cell to the terminal, and faster uplink and downlink data transmissions can be performed between the terminal and the at least one target cell after the cell handover command is received, thereby improving the efficiency of data transmissions.

In an exemplary embodiment, the present disclosure further provides a communication system, which may include a network device 100 and a terminal 200. The network device 100 may execute the beam indication method of the network device in the aforementioned embodiment of the present disclosure; and the terminal 200 may execute the beam indication method of the terminal in the aforementioned embodiment of the present disclosure.

Reference is made to FIG. 12, which is a schematic structural diagram of a beam indication apparatus 100 according to an exemplary embodiment. The beam indication apparatus 100 shown in FIG. 12 may be applied to a network device, and the apparatus 100 may include a communication module 1002.

The communication module 1002 is configured to send first indication information, where the first indication information at least includes beam information of at least one target cell, the beam information indicates a transmission beam for an uplink data transmission and a downlink data transmission between a terminal and the at least one target cell, and the at least one target cell is a cell selected from at least one candidate cell based on a beam measurement result.

In some embodiments, the at least one candidate cell is a cell pre-configured for the terminal based on a radio resource management measurement result.

In some embodiments, the communication module 1002 is further configured to send second indication information, where the second indication information indicates a type of the beam information,
where in a case that the type of the beam information is a joint beam indication, the first indication information includes a joint transmission configuration indicator (TCI) state indicating the transmission beam for the uplink data transmission and the downlink data transmission between the terminal and the at least one target cell; and/or
in a case that the type of the beam information is a separate beam indication, the first indication information includes an uplink TCI state and a downlink TCI state, the uplink TCI state indicates a transmission beam for the uplink data transmission between the terminal and the at least one target cell, and the downlink TCI state indicates a transmission beam for the downlink data transmission between the terminal and the at least one target cell.

In some embodiments, the first indication information and the second indication information are carried in the same signaling.

In some embodiments, the first indication information is carried in a first signaling, the second indication information is carried in a second signaling, and the first signaling and the second signaling are different.

In some embodiments, the second signaling includes an RRC signaling or a MAC CE signaling.

In some embodiments, the beam information of the at least one target cell is configured in an RRC configuration parameter of a source cell, or is configured in an RRC configuration parameter of the at least one target cell, or is configured independently of an RRC configuration parameter of a source cell and an RRC configuration parameter of the at least one target cell, where the source cell is a serving cell where the terminal currently camps.

In some embodiments, the beam information of the at least one target cell is configured in the RRC configuration parameter of the source cell, and the communication module 1002 is configured to:
send the first indication information based on a type of beam information of the source cell.

In some embodiments, the type of the beam information of the at least one target cell is the same as the type of the beam information of the source cell.

In some embodiments, the beam information of the at least one target cell is configured in the RRC configuration parameter of the at least one target cell, the communication module 1002 is configured to: send a third signaling, where the third signaling includes the second indication information, and
the communication module is further configured to obtain the type of the beam information of the at least one target cell; and send a fourth signaling based on the type of the beam information of the at least one target cell, where the fourth signaling includes the first indication information.

In some embodiments, the beam information of the at least one target cell is configured in an RRC configuration parameter of the at least one target cell, the first indication information includes a target reference signal of the at least one target cell, and a beam corresponding to the target reference signal is the transmission beam for the uplink data transmission and the downlink data transmission between the terminal and the at least one target cell.

In some embodiments, the target reference signal includes a first reference signal and a second reference signal, a beam corresponding to the first reference signal is a transmission beam for the uplink data transmission between the terminal and the at least one target cell, and a beam corresponding to the second reference signal is a transmission beam for the downlink data transmission between the terminal and the at least one target cell.

In some embodiments, in a case that the beam information is carried in a first indication field of the first indication information, the transmission beam indicated by the beam information is used to transmit all channels or signals between the terminal and the at least one target cell.

In some embodiments, in a case that the beam information is carried in a second indication field of the first indication information, the transmission beam indicated by the beam information is used to transmit a designated channel or a designated signal between the terminal and the at least one target cell, the designated channel includes a downlink control channel, and the designated signal includes a downlink control signal.

In some embodiments, in a case that the at least one target cell includes a primary cell and a secondary cell, the beam information indicates transmission beams of all cells constituting the at least one target cell.

In some embodiments, in a case that the beam information of the at least one target cell is configured independently of an RRC configuration parameter of the source cell and an RRC configuration parameter of the at least one candidate cell, the at least one target cell includes a primary cell and a secondary cell, the source cell is a serving cell where the terminal currently camps, the communication module 1002 is configured to:
send third indication information, where the third indication information indicates one or more cells within the at least one target cell that support simultaneously applying the beam information.

Reference is made to FIG. 13, which is a schematic structural diagram of another beam indication apparatus 200 according to an exemplary embodiment. The beam indication apparatus 200 shown in FIG. 13 may be applied to a terminal, and the apparatus 200 may include a communication module 2002.

The communication module 2002 is configured to receive first indication information, where the first indication information at least includes beam information of at least one target cell, the beam information indicates a transmission beam for an uplink data transmission and a downlink data transmission between the terminal and the at least one target cell, and the at least one target cell is a cell selected from at least one candidate cell based on a beam measurement result.

In some embodiments, the at least one candidate cell is the cell pre-configured for the terminal based on the radio resource management measurement result.

In some embodiments, the communication module 2002 is further configured to receive second indication information, where the second indication information indicates a type of the beam information,
where in a case that the type of the beam information is a joint beam indication, the first indication information includes a joint transmission configuration indicator (TCI) state indicating the transmission beam for the uplink data transmission and the downlink data transmission between the terminal and the at least one target cell; and/or
in a case that the type of the beam information is a separate beam indication, the first indication information includes an uplink TCI state and a downlink TCI state, the uplink TCI state indicates a transmission beam for the uplink data transmission between the terminal and the at least one target cell, and the downlink TCI state indicates a transmission beam for the downlink data transmission between the terminal and the at least one target cell.

In some embodiments, the first indication information and the second indication information are carried in the same signaling.

In some embodiments, the first indication information is carried in a first signaling, the second indication information is carried in a second signaling, and the first signaling and the second signaling are different.

In some embodiments, the second signaling includes an RRC signaling or a MAC CE signaling.

In some embodiments, the beam information of the at least one target cell is configured in an RRC configuration parameter of a source cell, or is configured in an RRC configuration parameter of the at least one target cell, or is configured independently of an RRC configuration parameter of a source cell and an RRC configuration parameter of the at least one target cell, where the source cell is a serving cell where the terminal currently camps.

In some embodiments, the beam information of the at least one target cell is configured in the RRC configuration parameter of the source cell, and the type of the beam information of the at least one target cell is the same as the type of the beam information of the source cell.

In some embodiments, the beam information of the at least one target cell is configured in the RRC configuration parameter of the at least one target cell, the communication module 2002 is configured to receive a third signaling, where the third signaling includes the second indication information; and receive a fourth signaling, where the fourth signaling includes the first indication information, where the fourth signaling is sent by a network device based on the type of the beam information of the at least one target cell.

In some embodiments, the beam information of the at least one target cell is configured in an RRC configuration parameter of the at least one target cell, the first indication information includes a target reference signal of the at least one target cell, and a beam corresponding to the target reference signal is the transmission beam for the uplink data transmission and the downlink data transmission between the terminal and the at least one target cell.

In some embodiments, the target reference signal includes a first reference signal and a second reference signal, a beam corresponding to the first reference signal is a transmission beam for the uplink data transmission between the terminal and the at least one target cell, and a beam corresponding to the second reference signal is a transmission beam for the downlink data transmission between the terminal and the at least one target cell.

In some embodiments, in a case that the beam information is carried in a first indication field of the first indication information, the transmission beam indicated by the beam information is used to transmit all channels or signals between the terminal and the at least one target cell.

In some embodiments, in a case that the beam information is carried in a second indication field of the first indication information, the transmission beam indicated by the beam information is used to transmit a designated channel or a designated signal between the terminal and the at least one target cell, the designated channel includes a downlink control channel, and the designated signal includes a downlink control signal.

In some embodiments, in a case that the at least one target cell includes a primary cell and a secondary cell, the beam information indicates transmission beams of all cells constituting the at least one target cell.

In some embodiments, in a case that the beam information of the at least one target cell is configured independently of an RRC configuration parameter of the source cell and an RRC configuration parameter of the at least one candidate cell, the at least one target cell includes a primary cell and a secondary cell, the source cell is a serving cell where the terminal currently camps, the communication module 2002 is configured to:
receive third indication information, where the third indication information indicates one or more cells within the at least one target cell that support simultaneously applying the beam information.

In some embodiments, the beam indication apparatus 200 further includes a processing module 2004, and
the processing module 2004 is configured to obtain the beam information of the at least one target cell based on an RRC configuration parameter of the at least one target cell.

In some embodiments, the beam information of the at least one target cell is configured in the RRC configuration parameter of the at least one target cell, and the processing module 2004 is configured to:
obtain the beam information of the at least one target cell based on the RRC configuration parameter of the at least one target cell, after receiving a cell handover command of the at least one target cell.

In some embodiments, the processing module 2004 is configured to report a beam application time, where the beam application time indicates a minimum interval time for the terminal and the at least one target cell to perform the uplink data transmission and the downlink data transmission based on the beam information, and the beam application time at least includes a time for the terminal to read the RRC configuration parameter.

Regarding the apparatuses in the above embodiments, specific manners for performing operations by multiple modules have been described in detail in the embodiments of the methods, and will not be elaborated here.

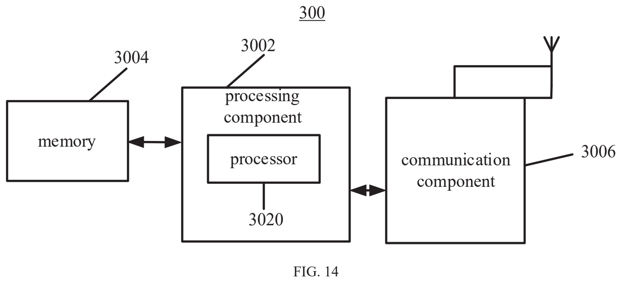

Reference is made to FIG. 14, which is a schematic structural diagram of a communication device according to an exemplary embodiment. The communication device 300 may be a network device 100 in a communication system, or may be a terminal 200 in a communication system.

Referring to FIG. 14, the communication device 300 may include one or more of the following components: a processing component 3002, a memory 3004, and a communication component 3006.

The processing component 3002 may be configured to control overall operations of the communication device 300, such as operations associated with display, phone call, data communication, camera operations, and recording operations. The processing component 3002 may include one or more processors 3020 configured to execute instructions to complete all or part of steps of the above-mentioned beam indication method. In addition, the processing component 3002 may include one or more modules configured to perform an interaction between the processing component 3002 and other components. For example, the processing component 3002 may include a multimedia module configured to perform an interaction between the multimedia component and the processing component 3002.

The memory 3004 is configured to store various types of data to support operations on the communication device 300. Examples of such data include instructions for any application or method operating on the communication device 300, contact data, phone book data, messages, pictures, videos, etc. The memory 3004 may be implemented by any type of volatile storage device or nonvolatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The communication component 3006 is configured to facilitate wired or wireless communication between the communication device 300 and other devices. The communication device 300 may access a wireless network based on a communication standard, such as Wi-Fi, 2G, 3G, 4G, 5G, 6G, NB-IOT, eMTC, or a combination thereof. In an exemplary embodiment, the communication component 3006 receives a broadcast signal or broadcastrelated information from an external broadcast management system via a broadcast channel. In an exemplary embodiment, the communication component 3006 also includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology and other technologies.

In an exemplary embodiment, the communication device 300 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above-mentioned beam indication method.

The communication device 300 may be an independent electronic device or a part of an independent electronic device. For example, in an embodiment, the electronic device may be an integrated circuit (IC) or a chip, where the integrated circuit may be an IC or a collection of multiple ICs. The chip may include, but not limited to, the following types: GPU (Graphics Processing Unit), CPU (Central Processing Unit), FPGA (Field Programmable Gate Array), DSP (Digital Signal Processor), ASIC (Application Specific Integrated Circuit), SOC (System on Chip, SoC), etc. The above-mentioned integrated circuit or chip may be configured to execute executable instructions (or codes) to implement the above-mentioned beam indication method. The executable instructions may be stored in the integrated circuit or chip, or may be obtained from other devices or equipment, such as the integrated circuit or chip including a processor, a memory, and an interface for communicating with other devices. The executable instruction can be stored in the processor, and when the executable instruction is executed by the processor, the above-mentioned beam indication method is implemented; alternatively, the integrated circuit or chip can receive the executable instructions through the interface and transmit it to the processor for execution, so as to implement the above-mentioned beam indication method.

In an exemplary embodiment, the present disclosure further provides a computer-readable storage medium, configured to store computer program instructions thereon. The computer program instructions, when executed by a processor, cause steps of the beam indication method provided by the present disclosure to be implemented. By way of example, the computer-readable storage medium may be a non-transitory computer-readable storage medium including instructions, for example, the above-mentioned memory 3004 including instructions, and the above-mentioned instructions may be executed by the processor 3020 of the communication device 300 to implement the above-mentioned beam indication method. For example, the non-transitory computer-readable storage medium may be a ROM, a random access memory (RAM), a CD-ROM, a magnetic tape, a floppy disk, an optical data storage device, and the like.

In another exemplary embodiment, a computer program product is further provided. The computer program product includes a computer program that can be executed by a programmable device. The computer program has a code for executing the above beam indication method when executed by a programmable device.

Those skilled in the art will readily appreciate other implementations of the present disclosure after considering the specification and practicing the present disclosure. The present disclosure is intended to cover any variations, uses or adaptations of the present disclosure. These variations, uses, or adaptations follow general principles of the present disclosure and include common general knowledge or conventional techniques in the art not disclosed in the present disclosure. The specification and embodiments are to be regarded as exemplary only, and the true scope and spirit of the present disclosure are indicated by the appended claims.

It should be understood that the present disclosure is not limited to the exact structures that have been described above and shown in the drawings, and that various modifications and changes can be made without departing from the scope thereof. The scope of the present disclosure is limited only by the appended claims.

## Claims

1. A beam indication method, performed by a network device, comprising:
sending first indication information, wherein the first indication information at least comprises beam information of at least one target cell, the beam information indicates a transmission beam for an uplink data transmission and a downlink data transmission between a terminal and the at least one target cell, and the at least one target cell is a cell selected from at least one candidate cell based on a beam measurement result.

2. The method according to claim 1, wherein the at least one candidate cell is a cell pre-configured for the terminal based on a radio resource management measurement result.

3. The method according to claim 1, further comprising:
sending second indication information, wherein the second indication information indicates a type of the beam information,
wherein in a case that the type of the beam information is a joint beam indication, the first indication information comprises a joint transmission configuration indicator (TCI) state indicating the transmission beam for the uplink data transmission and the downlink data transmission between the terminal and the at least one target cell; and/or
in a case that the type of the beam information is a separate beam indication, the first indication information comprises an uplink TCI state and a downlink TCI state, the uplink TCI state indicates a transmission beam for the uplink data transmission between the terminal and the at least one target cell, and the downlink TCI state indicates a transmission beam for the downlink data transmission between the terminal and the at least one target cell.

4. The method according to claim 3, wherein the first indication information and the second indication information are carried in the same signaling.

5. The method according to claim 3, wherein the first indication information is carried in a first signaling, the second indication information is carried in a second signaling, and the first signaling and the second signaling are different.

6. The method according to claim 5, wherein the second signaling comprises a radio resource control (RRC) signaling or a medium access control control element (MAC CE) signaling.

7. The method according to claim 3, wherein the beam information of the at least one target cell is configured in an RRC configuration parameter of a source cell, or is configured in an RRC configuration parameter of the at least one target cell, or is configured independently of an RRC configuration parameter of a source cell and an RRC configuration parameter of the at least one target cell, wherein the source cell is a serving cell where the terminal currently camps.

8. The method according to claim 7, wherein the beam information of the at least one target cell is configured in the RRC configuration parameter of the source cell, and the sending the first indication information comprises:
sending the first indication information based on a type of beam information of the source cell.

9. The method according to claim 8, wherein the type of the beam information of the at least one target cell is the same as the type of the beam information of the source cell.

10. The method according to claim 7, wherein the beam information of the at least one target cell is configured in the RRC configuration parameter of the at least one target cell,
the sending the second indication information comprises:
sending a third signaling, wherein the third signaling comprises the second indication information, and
the sending the first indication information comprises:
obtaining the type of the beam information of the at least one target cell; and
sending a fourth signaling based on the type of the beam information of the at least one target cell, wherein the fourth signaling comprises the first indication information.

11. The method according to claim 1, wherein the beam information of the at least one target cell is configured in an RRC configuration parameter of the at least one target cell, the first indication information comprises a target reference signal of the at least one target cell, and a beam corresponding to the target reference signal is the transmission beam for the uplink data transmission and the downlink data transmission between the terminal and the at least one target cell.

12. The method according to claim 11, wherein the target reference signal comprises a first reference signal and a second reference signal, a beam corresponding to the first reference signal is a transmission beam for the uplink data transmission between the terminal and the at least one target cell, and a beam corresponding to the second reference signal is a transmission beam for the downlink data transmission between the terminal and the at least one target cell.

13. The method according to any one of claims 3 to 10, wherein in a case that the beam information is carried in a first indication field of the first indication information, the transmission beam indicated by the beam information is used to transmit all channels or signals between the terminal and the at least one target cell.

14. The method according to any one of claims 3 to 10, wherein in a case that the beam information is carried in a second indication field of the first indication information, the transmission beam indicated by the beam information is used to transmit a designated channel or a designated signal between the terminal and the at least one target cell, the designated channel comprises a downlink control channel, and the designated signal comprises a downlink control signal.

15. The method according to any one of claims 3 to 10, wherein in a case that the at least one target cell comprises a primary cell and a secondary cell, the beam information indicates transmission beams of all cells constituting the at least one target cell.

16. The method according to any one of claims 3 to 7, wherein in a case that the beam information of the at least one target cell is configured independently of an RRC configuration parameter of the source cell and an RRC configuration parameter of the at least one candidate cell, the at least one target cell comprises a primary cell and a secondary cell, the source cell is a serving cell where the terminal currently camps, the method further comprises:
sending third indication information, wherein the third indication information indicates one or more cells within the at least one target cell that support simultaneously applying the beam information.

17. A beam indication method, performed by a terminal, comprising:
receiving first indication information, wherein the first indication information at least comprises beam information of at least one target cell, the beam information indicates a transmission beam for an uplink data transmission and a downlink data transmission between the terminal and the at least one target cell, the at least one target cell is a cell selected from at least one candidate cell based on a beam measurement result, and the at least one candidate cell is a cell pre-configured for the terminal based on a radio resource management measurement result.

18. The method according to claim 17, wherein the at least one candidate cell is the cell pre-configured for the terminal based on the radio resource management measurement result.

19. The method according to claim 17, further comprising:
receiving second indication information, wherein the second indication information indicates a type of the beam information,
wherein in a case that the type of the beam information is a joint beam indication, the first indication information comprises a joint transmission configuration indicator (TCI) state indicating the transmission beam for the uplink data transmission and the downlink data transmission between the terminal and the at least one target cell; and/or
in a case that the type of the beam information is a separate beam indication, the first indication information comprises an uplink TCI state and a downlink TCI state, the uplink TCI state indicates a transmission beam for the uplink data transmission between the terminal and the at least one target cell, and the downlink TCI state indicates a transmission beam for the downlink data transmission between the terminal and the at least one target cell.

20. The method according to claim 19, wherein the first indication information and the second indication information are carried in the same signaling.

21. The method according to claim 19, wherein the first indication information is carried in a first signaling, the second indication information is carried in a second signaling, and the first signaling and the second signaling are different.

22. The method according to claim 21, wherein the second signaling comprises an RRC signaling or a MAC CE signaling.

23. The method according to claim 19, wherein the beam information of the at least one target cell is configured in an RRC configuration parameter of a source cell, or is configured in an RRC configuration parameter of the at least one target cell, or is configured independently of an RRC configuration parameter of a source cell and an RRC configuration parameter of the at least one target cell, wherein the source cell is a serving cell where the terminal currently camps.

24. The method according to claim 23, wherein the beam information of the at least one target cell is configured in the RRC configuration parameter of the source cell, and the type of the beam information of the at least one target cell is the same as the type of the beam information of the source cell.

25. The method according to claim 23, wherein the beam information of the at least one target cell is configured in the RRC configuration parameter of the at least one target cell,
the receiving the second indication information comprises:
receiving a third signaling, wherein the third signaling comprises the second indication information, and
the receiving first indication information comprises:
receiving a fourth signaling, wherein the fourth signaling comprises the first indication information, wherein the fourth signaling is sent by a network device based on the type of the beam information of the at least one target cell.

26. The method according to claim 17, wherein the beam information of the at least one target cell is configured in an RRC configuration parameter of the at least one target cell, the first indication information comprises a target reference signal of the at least one target cell, and a beam corresponding to the target reference signal is the transmission beam for the uplink data transmission and the downlink data transmission between the terminal and the at least one target cell.

27. The method according to claim 26, wherein the target reference signal comprises a first reference signal and a second reference signal, a beam corresponding to the first reference signal is a transmission beam for the uplink data transmission between the terminal and the at least one target cell, and a beam corresponding to the second reference signal is a transmission beam for the downlink data transmission between the terminal and the at least one target cell.

28. The method according to any one of claims 19 to 25, wherein in a case that the beam information is carried in a first indication field of the first indication information, the transmission beam indicated by the beam information is used to transmit all channels or signals between the terminal and the at least one target cell.

29. The method according to any one of claims 19 to 25, wherein in a case that the beam information is carried in a second indication field of the first indication information, the transmission beam indicated by the beam information is used to transmit a designated channel or a designated signal between the terminal and the at least one target cell, the designated channel comprises a downlink control channel, and the designated signal comprises a downlink control signal.

30. The method according to any one of claims 19 to 25, wherein in a case that the at least one target cell comprises a primary cell and a secondary cell, the beam information indicates transmission beams of all cells constituting the at least one target cell.

31. The method according to any one of claims 19 to 23, wherein in a case that the beam information of the at least one target cell is configured independently of an RRC configuration parameter of the source cell and an RRC configuration parameter of the at least one candidate cell, the at least one target cell comprises a primary cell and a secondary cell, the source cell is a serving cell where the terminal currently camps, the method further comprises:
receiving third indication information, wherein the third indication information indicates one or more cells within the at least one target cell that support simultaneously applying the beam information.

32. The method according to claim 17, further comprising:
obtaining the beam information of the at least one target cell based on an RRC configuration parameter of the at least one target cell.

33. The method according to claim 32, wherein the beam information of the at least one target cell is configured in the RRC configuration parameter of the at least one target cell, and the obtaining the beam information of the at least one target cell based on the RRC configuration parameter of the at least one target cell comprises:
obtaining the beam information of the at least one target cell based on the RRC configuration parameter of the at least one target cell, after receiving a cell handover command of the at least one target cell.

34. The method according to claim 32 or 33, further comprising:
reporting a beam application time, wherein the beam application time indicates a minimum interval time for the terminal and the at least one target cell to perform the uplink data transmission and the downlink data transmission based on the beam information, and the beam application time at least comprises a time for the terminal to read the RRC configuration parameter.

35. A beam indication apparatus, comprising:
a communication module, configured to send first indication information, wherein the first indication information at least comprises beam information of at least one target cell, the beam information indicates a transmission beam for an uplink data transmission and a downlink data transmission between a terminal and the at least one target cell, and the at least one target cell is a cell selected from at least one candidate cell based on a beam measurement result.

36. A beam indication apparatus, comprising:
a communication module, configured to receive first indication information, wherein the first indication information at least comprises beam information of at least one target cell, the beam information indicates a transmission beam for an uplink data transmission and a downlink data transmission between a terminal and the at least one target cell, and the at least one target cell is a cell selected from at least one candidate cell based on a beam measurement result.

37. A network device, comprising:
a processor; and
a memory configured to store processor-executable instructions,
wherein the processor is configured to execute steps of the method according to any one of claims 1 to 16.

38. A terminal, comprising:
a processor; and
a memory configured to store processor-executable instructions,
wherein the processor configured to execute steps of the method according to any one of claims 17 to 34.

39. A computer-readable storage medium, configured to store computer program instructions thereon, wherein the computer program instructions, when executed by a processor, cause steps of the method according to any one of claims 1 to 16 to be implemented, or the computer program instructions, when executed by a processor, cause steps of the method according to any one of claims 17 to 34 to be implemented.

40. A communication system, comprising:
a network device, configured to perform the method according to any one of claims 1 to 16; and
a terminal, configured to perform the method according to any one of claims 17 to 34.
